# EUROPEAN PATENT SPECIFICATION

(11) **EP 0 533 911 B1**
(45) Date of publication and mention of the grant of the patent: **26.06.1996**
(21) Application number: 92910953.6
(22) Date of filing: 15.04.1992
(51) Int. Cl.: F16C 17/06, F16C 17/03

(54) **HYDRODYNAMIC BEARINGS HAVING SPACED BEARING PADS**
HYDRODYNAMISCHE LAGER MIT RÄUMLICH GETRENNTEN LAGERSEGMENTEN
PALIERS HYDRODYNAMIQUES COMPORTANT DES PATINS DE PALIERS

(30) Priority: 15.04.1991 US 685148
(43) Date of publication of application: 31.03.1993
(73) Proprietor: Ide, Russell D., Exeter, Rhode Island 02822 (US)
(72) Inventor: Ide, Russell D., Exeter, Rhode Island 02822 (US)
(74) Representative: Fuchs, Luderschmidt & Partner Patentanwälte
(86) International application number: US9203058
(87) International publication number: WO9218783

(56) References cited:
- EP-A- 0 324 188
- EP-A- 0 343 620
- WO-A-88/09443
- DE-A- 1 425 086
- GB-A- 1 392 245
- US-A- 1 444 841
- US-A- 2 250 546
- US-A- 3 390 691
- US-A- 4 496 251
- US-A- 4 676 668
- US-A- 4 884 899
- US-A- 4 919 547

## Description

### Field of the Invention

The present invention relates to hydrodynamic bearings.

### Background of the Invention

In hydrodynamic bearings, a rotating object such as a shaft is supported by a stationary bearing pad via a pressurized fluid such as oil, air or water. Hydrodynamic bearings take advantage of the fact that when the rotating object moves, it does not slide along the top of the fluid. Instead, the fluid in contact with the rotating object adheres tightly to the rotating object, and motion is accompanied by slip or shear between the fluid particles through the entire height of the fluid film. Thus, if the rotating object and the contacting layer of fluid move at a velocity which is known, the velocity at intermediate heights of the fluid thickness decreases at a known rate until the fluid in contact with the stationary bearing pad adheres to the bearing pad and is motionless. When, by virtue of the load resulting from its support of the rotating object, the bearing pad is deflected at a small angle to the rotating member, the fluid will be drawn into the wedge-shaped opening, and sufficient pressure will be generated in the fluid film to support the load. This fact is utilized in thrust bearings for hydraulic turbines and propeller shafts of ships as well as in the conventional hydrodynamic journal bearing.

Both thrust bearings and radial or journal bearings normally are characterized by shaft supporting pads spaced about an axis. The axis about which the pads are spaced generally corresponds to the longitudinal axis of the shaft to be supported for both thrust and journal bearings. This axis may be termed the major axis.

In an ideal hydrodynamic bearing, the hydrodynamic wedge extends across the entire bearing pad face, the fluid film is just thick enough to support the load, the major axis of the bearing and the axis of the shaft are aligned, leakage of fluid from the ends of the bearing pad surface which are adjacent the leading and trailing edges is minimized, the fluid film is developed as soon as the shaft begins to rotate, and, in the case of thrust bearings, the bearing pads are equally loaded. While an ideal hydrodynamic bearing has yet to be achieved, a bearing which substantially achieves each of these objectives is said to be designed so as to optimize hydrodynamic wedge formation.

The present invention relates to hydrodynamic bearings that are also sometimes known as movable pad bearings. Generally these bearings are mounted in such a way that they can move to permit the formation of a wedge-shaped film of lubricant between the relatively moving parts. Since excess fluid causes undesirable friction and power losses, the fluid thickness is preferably just enough to support the maximum load. This is true when the formation of the wedge is optimized. Essentially the pad displaces with a pivoting or a swing-type motion about a center located in front of the pad surface, and bearing friction tends to open the wedge. When the formation of the wedge is optimized, the wedge extends across the entire pad face. Moreover, the wedge is formed at the lowest speed possible, ideally as soon as the shaft begins to rotate.

In known radial pad type bearings, it has heretofore been believed necessary to provide an accurately determined clearance between the bearing and the rotating object supported so as to alloy the appropriate deflection of the bearing pads to form the hydrodynamic wedge. The requirement of close tolerances is particularly troublesome in the manufacture of gas lubricated bearings. Another problem with gas lubricated bearings is the breakdown of the fluid film at high speeds. These problems have limited the use of gas lubricated hydrodynamic bearings.

U.S. Patent No. 3,107,955 to Trumpler discloses one example of a bearing having beam mounted bearing pads that displaces with a pivoting or swing-type motion about a center located in front of the pad surface. This bearing, like many prior art bearings, is based only on a two dimensional model of pad deflection. Consequently, optimum wedge formation is not achieved.

In the Hall patent, U.S. No. 2,137,487, there is shown a hydrodynamic moveable pad bearing that develops its hydrodynamic wedge by sliding of its pad along spherical surfaces. In many cases the pad sticks and the corresponding wedge cannot be developed. In the Greene Patent, U.S. No. 3,930,691, the rocking is provided by elastomers that are subject to contamination and deterioration.

U.S. Patent 4,099,799 to Etsion discloses a non-unitary cantilever mounted resilient pad gas bearing. The disclosed bearing employs a pad mounted on a rectangular cantilever beam to produce a lubricating wedge between the pad face and the rotating shaft. Both thrust bearings and radial or journal bearings are disclosed.

There is shown in the Ide patent, U.S. No. 4,496,251, a pad which deflects with web-like ligaments so that a wedge shaped film of lubricant is formed between the relatively moving parts.

U.S. Patent 4,515,486 discloses hydrodynamic thrust and journal bearings comprising a number of bearing pads, each having a face member and a support member that are separated and bonded together by an elastomeric material.

U.S. Patent No. 4,526,482 discloses hydrodynamic bearings which are primarily intended for process lubricated applications, i.e., the bearing is designed to work in a fluid. The hydrodynamic bearings are formed with a central section of the load carrying surface that is more compliant than the remainder of the bearings such that they will deflect under load and form a pressure pocket of fluid to carry high loads.

It has also been noted, in Ide U.S. Patent No. 4,676,668, that bearing pads may be spaced from the support member by at least one leg which provides flexibility in three directions. To provide flexibility in the plane of motion, the legs are angled inward to form a conical shape with the apex of the cone or point of intersection in front of the pad surface. Each leg has a section modulus that is relatively small in the direction of desired motion to permit compensation for misalignments. These teachings are applicable to both journal and thrust bearings. While the disclosure of this patent represents a significant advance in the art, it has some shortcomings. One such shortcoming is the rigidity of the support structure and bearing pad which inhibits deformation of the pad surface. Further, the bearing construction is not unitary.

The last two patents are of particular interest because they demonstrate that despite the inherent and significant differences between thrust and journal bearings, there is some conceptual similarity between hydrodynamic journal bearings and hydrodynamic thrust bearings.

This application relates in part to hydrodynamic thrust bearings. When the hydrodynamic wedge in such bearings is optimized, the load on each of the circumferentially spaced bearings is substantially equal.

Presently, the most widely used hydrodynamic thrust bearing is the so-called Kingsbury shoe-type bearing. The shoe-type Kingsbury bearing is characterized by a complex structure which includes pivoted shoes, a thrust collar which rotates with the shaft and applies load to the shoes, a base ring for supporting the shoes, a housing or mounting which contains and supports the internal bearing elements, a lubricating system and a cooling system. As a result of this complex structure, Kingsbury shoe-type bearings are typically extraordinarily expensive.

An alternative to the complex Kingsbury shoe-type bearing is the unitary pedestal bearings. This bearing has been employed in, among other things, deep well pumps. This relatively simple structure is typically formed by sand casting or some other crude manufacturing technique because heretofore, the specific dimensions have not been deemed important. The bearing is structurally characterized by a flat base having a thick inner circumferential projection, a plurality of rigid pedestals extending transversely from the base and a thrust pad centered on each rigid pedestal.

Prior art hydrodynamic bearings often suffer from fluid leakage which causes breakdown of the fluid film. In radial bearings, the leakage primarily occurs at the axial ends of the bearing pad surface. In thrust bearings, the leakage primarily occurs at the outer circumferential periphery of the pad surface as a result of centrifugal forces action on the fluid. When wedge formation is optimized, fluid leakage is minimized.

A hydrodynamic bearing according to the preamble of claim 1 is e.g. disclosed in British Patent Specification 1392245. This prior document discloses an axial sliding bearing comprising an annular body having a coating of bearing metal applied to one end face of the sliding faces distributed over the periphery of said end face, each sliding face having a flat portion and a portion the cross-section of which is tapered, the annular body and the bearing metal coating having different coefficients of thermal expansion. The entire annular body is disposed on a supporting ring in such a way that the flat portions of any one sliding face are located symmetrically in relation to projections on the supporting ring. The supporting ring as the supporting structure comprises recesses which are therefore not a part of the pads.

It is an object of the present invention to provide a hydrodynamic bearing which is building up a thickness of the fluid film just enough to support maximum load, but to avoid undesirable friction. Furthermore a bearing should extend the fluid wedge across the entire pad face, it should provide a formation of the fluid wedge at the lowest speed possible. Further objects are to provide a bearing which can be manufactured with minimum bearing dimensions and still providing a simplified construction. Furthermore such a bearing should minimize fluid leakage.

### Summary of the Invention

The present invention discloses a pad type bearing according to claim 1. Preferred embodiments are defined in the enclosed subclaims.

The pad type bearing, which is preferably unitary, can be formed from a single piece of heavy walled tubing or a cylindrical journal that has been machined or formed with small grooves and slits, bores or cuts through or on the bearing wall to define a flexible journal or thrust pad and a support structure. The pads and support structure are designed to optimize the shape of the converging wedge formed between the pad surface and the shaft when the shaft rotates.

Specifically, it has been discovered that a hydrodynamic bearing operates most effectively when the hydrodynamic wedge has several characteristics. In particular, the wedge should extend across the entire pad surface; the wedge should have an appropriate thickness at all times; the wedge should be shaped so as to minimize fluid leakage; the wedge should accommodate misalignment such that the major axis of the bearing is colinear or substantially parallel to the axis of the shaft; and the wedge should be formed at the lowest speed possible to prevent damage to the wedge forming surface which generally occurs as a result of shaft to pad surface contact at low speeds. Moreover, with thrust bearings, the loading among the spaced bearing pads should be equal.

With regard to thickness of the fluid film, it should be understood that the optimum thickness varies with loading. Under high or heavy loading, a relatively thick fluid film is desirable to adequately support the load. However, thicker films increase friction and power loss. Thus, the bearings are preferably designed to provide the minimum thickness necessary to support the shaft at maximum load.

The support structure is preferably unitary (one-piece).

The inventor has discovered that in many specific applications such as in high speed applications, it is necessary to examine and evaluate the dynamic flexibility of the entire system consisting of the shaft or rotor, the hydrodynamic lubricating film and the bearing. In computer analysis of this system using a finite element model, it has been determined that it is necessary to treat the entire bearing as a completely flexible member that changes shape under operating loads. By adding more or less flexibility via machining of the basic structure, bearing characteristics may be achieved that provide stable low friction operation over wide operating ranges. A number of variables have been found to substantially affect the bearing's performance characteristics. Among the most important variables are the shape, size, location and material characteristics (e.g., modulus of elasticity, etc.) of the pad and support members.

Specific applications of the bearings of the present invention include electric motors, fans, turbochargers, internal combustion engines, outboard motors, and compressors/expanders. Test speeds have exceeded 300,000 r.p.m. It is noted that the cuts, grooves and openings, in addition to allowing the bearing pad to move to form a converging wedge for hydrodynamic lubrication, allow the pad itself to deflect and change shape by, for example, flattening. This improves operating performance by, among other things, changing the eccentricity of the bearing.

The bearings may be formed of metals, powdered metals, plastics, ceramics or composites. When manufactured in small quantities, the bearings are typically machined by facing, turning, and milling the blanks to form larger grooves or openings; smaller grooves are formed by water-jet cutting, electrical discharge or laser machining methods and allow total design flexibility to tune the bearing to provide desired characteristics. Tuning will essentially change the stiffness that in turn eliminates vibration. Manufacture of larger quantities of a single type bearing is preferably accomplished through injection molding, extrusion, powdered metal die casting, investment casting or some similar manufacturing technique. In accordance with one aspect of the present invention, intermediate quantities of bearings are manufactured according to a novel method combining machining and investment casting techniques. The present invention also contemplates easily moldable bearings which include no hidden openings such that they can be molded in a simple two-piece mold. In general, the bearings of the present invention can be manufactured at a fraction of the cost of competitive bearings.

Unlike prior pad type bearings the present invention allows for the pad itself to change shape (e g., flatten) to improve performance ; and allows for comparable deflections within a smaller envelope (i.e., the difference between the radially inner journal surface and the radially outer journal surface in journal bearings) especially in journal bearings. All of these characteristics contribute to formation of an optimum hydrodynamic wedge.

While there are numerous arrangements of bores, grooves, cuts, or slits there are primarily two modes of deflections: namely, one or more ligaments or membranes which deflect in the general direction of load in a bending mode and secondly, by torsional deflection in a beam or membrane in a direction extending away from the pad along the longitudinal axis of the shaft in journal bearings. The degree of deflection in the bending mode is, in part, a function of the stiffness of the support structure in the radial direction. The pad itself may be made to deflect under a load to form a different shape by providing internal cuts beneath the pad or by undercutting the edges of the pad. In either case, the cuts are specifically made to result in a predetermined shape under load. By surrounding or backing certain ligaments or membranes with lubricating fluid, a damping element may be added to the design.

The journal bearings of the present invention also fits in a relatively small envelope (i.e., spacing between the housing outer diameter and the pad inner diameter).

The need for close tolerances between the bearing pad and the shaft portion to be supported can be obviated by dimensioning the bearing so as to eliminate the spacing between the bearing pad and the shaft portion to be supported, while at the same time dimensioning the support structure such that the radial (in the case of a journal bearing) or axial (in the case of a thrust bearing) stiffness of the bearing is less that the corresponding fluid-film stiffness of the supporting fluid. Either the entire pad or only a portion thereof can be pre-biased into contact with the shaft. For instance, with extremely flexible bearings, it may be desirable to pre-torque the entire bearing pad into contact with the shaft. On the other hand, in some instances it is advantageous to pre-torque only the trailing edge of the bearing pad into contact with the shaft so as to define a hydrodynamic wedge. Thus, the bearings of the present invention can be designed to have an interference fit when installed on the shaft.

Of course, the present invention may apply to any radial, thrust or combined radial and thrust form of bearings. More specifically, if the bearing support structure is symmetrical about the bearing's pad circumferential center line, the bearing will be bi-directional, i.e., capable of supporting a shaft for rotation in two directions in an identical fashion. However, if the bearing support structure is non-symmetrical about the bearing's pad circumferential center line the bearing will deflect differently when supporting a shaft for rotation in a first direction as compared to rotation in the opposite direction. For both journal or radial bearings and thrust bearings, the major axis is the central axis of the cylindrical blank from which the bearing is formed.

In a preferred embodiment, the bearing pads can be supported for deflection so as to retain the hydrodynamic fluid, thus obviating the problem of fluid leakage. With respect to radial or journal bearings, the support structure is designed such that, under load, the bearing pad deflects to form a fluid retaining pocket. Generally, such a support is achieved when the primary support portion is connected to the bearing pad proximate the axial edges of the bearing pad and the center of the bearing pad is not directly supported, i.e., is free to deflect radially outward. With respect to thrust bearings, the pad is supported so as to tilt toward the bearing's inner diameter under load so as to prevent centrifugal leakage. Generally, this is achieved when the pad support surface at which the primary support structure supports the bearing pad is located closer to the bearing outer diameter than to the bearing inner diameter. When the primary support structure includes two or more radially spaced beams, the overall support structure must be designed to cause deflection of the bearing pad at the inner end. Further, when the bearing pad is supported by a plurality of radially spaced beams and the region between the beams is not directly supported, the pad will tend to deflect so as to form a concave fluid retaining channel.

A number of methods of manufacturing the bearings of the present invention are possible. The selection of a particular method of manufacturing depends largely on the volume of the particular bearing to be manufactured and the materials used. In low volume applications, or when it is desired to produce prototypes for testing and/or production of molds or the like, the bearings are preferably manufactured from metallic cylindrical blanks such as heavy wall tubing or other journals which are machined to provided radial and/or facing bores or grooves and formed with radial cuts or slits through either numerically controlled electrical discharge manufacturing techniques, numerically controlled laser cutting techniques, or numerically controlled water-jet cutting. In intermediate volumes, the bearings of the present invention are preferably manufactured using an investment casting method in accordance with the present invention. In high volume applications, the bearings of the present invention can be manufactured using a wide variety of materials such as plastics, ceramics, powdered and non-powdered metals, and composites. In high volume applications, a number of manufacturing methods, including injection molding, casting, powdered metal, die casting, and extrusion, can be economically employed. The bearings of the present invention can be formed in a shape which is easily moldable.

In short, the present invention relates to radial, thrust and compound radial and thrust hydrodynamic bearings which perform significantly better than known bearings and can be manufactured at a fraction of the cost of competitive bearings.

### Brief Description of the Drawings

The details of the invention will be described in connection with the accompanying drawing, in which:

Figure 1A is a bottom view of a thrust bearing according to the present invention.

Figure 1B is a partial sectional view of the thrust bearing of Figure 1A along the lines indicated in Figure 1A.

Figure 1C is a top view of the thrust bearing of Figure 1A.

Figure 2A is a top view of a thrust or combined radial/thrust bearing.

Figure 2B is a bottom view of the thrust bearing or combined radial/thrust bearing of Figure 2A.

Figure 2C is a cross-section through the lines indicated in Figure 2A.

Figure 3A shows a top view of a thrust bearing pad formed with a bottom recess indicated in phantom.

Figure 3B shows a side view of the thrust bearing pad of Figure 3A.

Figure 3C shows a side view of a radial bearing pad formed with a bottom recess indicated in phantom.

Figure 4A is a top view of a thrust bearing pad formed with a bottom recess on each edge indicated in phantom.

Figure 4B is a side view of the thrust bearing pad of Figure 4A with the bottom recesses indicated in phantom.

Figure 4C is a side view of a radial or journal bearing pad with bottom recesses formed proximate each edge as indicated in phantom.

Figure 5A is a top view of a bearing pad for a radial bearing.

Figure 5B is a side view of the bearing pad of Figure 5A.

Figure 5C is a bottom view of the bearing pad of Figure 5A.

### Detailed Description of the Illustrative Embodiments

In describing the bearings of the present invention in an understandable way, it is helpful to describe some common details.

Each bearing pad of a bearing supporting a shaft includes a leading edge and a trailing edge. The leading edge is defined as the edge first approached by a point on the circumference of the shaft as it continues to rotate. Similarly, the trailing edge is defined as the edge approached circumferentially later by the same point on the shaft as it continues to rotate. When the shaft is rotating in the proper direction, it moves, on a fluid film, from the the leading edge across the bearing pad and off the trailing edge.

Although specific reference is made to either journal bearings or thrust bearings to facilitate an understanding of this invention, some of the same principles of bearing design apply regardless of the specific form of bearing being designed. For example, both types of bearings operate on the principle of formation of a hydrodynamic wedge. Further, the major axis of both journal bearings and thrust bearings is the central axis of the cylindrical blank from which the bearing is formed. The circumferential pad center line is the radially extending line passing through the geometric center of the pad and the major axis of the bearing. Accordingly, if either a thrust bearing or a journal bearing is symmetrical about this center line axis, i.e., the major axis, the bearing will be bi-directional.

There are significant differences between thrust bearings and journal or radial bearings. The most prominent difference is, of course, the portion of the shaft supported and consequently the orientation and/or attitude of the bearing pad supports. For instance, while journal bearings support circumferential portions of shafts, thrust bearings support shoulder or axial end portions of shafts. Other differences follow from this fundamental difference. For example, in a radial or journal bearing, the pads in the direction of the load take or support the load; whereas, in a thrust bearing, all pads normally share load. Moreover, a journal bearing generally has a built-in wedge due to differences in the shaft and bearing diameters; conversely, there is no such built-in wedge in thrust bearings. Additionally, while a journal or radial bearing controls rotational stability as well as load; a thrust bearing typically only carries load. It should also be understood that the design of journal bearings, particularly hydrodynamic journal bearings, is significantly more complicated than the design of thrust bearings. In part, this is because of the constraints imposed by the need to limit the radial envelope of the journal bearings. In order to accommodate these differences the configuration of the thrust bearings is naturally somewhat different than that of journal bearings. Nevertheless, as is evident from this disclosure, many of the principles discussed herein are applicable to either thrust or journal bearings.

The most important consideration in the performance of a hydrodynamic bearing is the shape of the space, typically a converging wedge, between the rotating shaft to be supported and the bearing pad surface. Since the shape of the shaft surface to be supported is basically invariable, it follows that the most important consideration in the design of hydrodynamic bearings is the shape of the pad surface under load. The shape of the pad surface under load principally depends upon two factors: the shape of the pad itself and the construction and location of the pad support structure. For purposes of this description a discussion of various pad designs will follow. It must be emphasized that pad-shapes used herein can be used with various support structures as e.g. known from EP-A-0 343 620. A bearing in accordance with the present invention can be constructed so that the bearing can be used bi-directional, i.e., the bearing is capable of supporting a shaft for either clockwise or counterclockwise rotation. The bearing is bi-directional because the pads are symmetrical about their center line, which is defined as the radial extending line passing through the bearing major axis and the geometric center of the pad.

A particularly important consideration in the design of thrust bearings of the present invention is the prevention of fluid leakage. To a large extent, this objective may be achieved by designing the support structures such that under load the inner edge of the bearing pads deflect downward. In operation, the downward deflection of the inner edge of the bearing pad corresponds to deflection away from the shaft supported. The deflected orientation of the bearing pad significantly inhibits the loss of fluid which otherwise occurs as a result of centrifugal forces' action on the fluid.

The loss of hydrodynamic fluid can be further reduced by supporting the bearing pad such that under load, the bearing pad deforms to form a lubricant retaining pocket. Such support may be achieved when the bearing pad is supported by a plurality of radially or circumferentially spaced beams and the region between the beams is not directly supported such that the unsupported central region of the pad will tend to deform outwardly away from the shaft so as to form a fluid retaining pocket. A greater pocket is obtained when the beams are spaced further apart.

With respect to the prevention of fluid leakage and the formation of a hydrodynamic wedge and in accordance with the invention an important consideration in the design of specific pad shapes is the provision of bottom recesses on the pads.

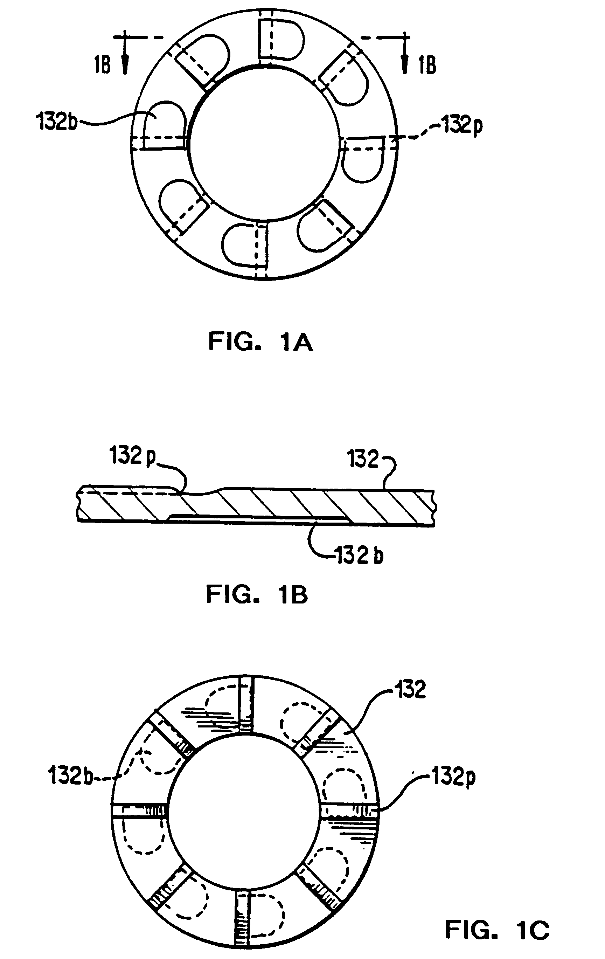

A bearing design according to the invention is depicted in FIGS 1A-1C. These drawings depict a washer-like thrust bearing in which the desired pad shape is obtained in an extremely thin washer-like cylindrical element. FIG. 1A is a bottom view of the washer-like bearing showing circumferentially spaced bottom recesses 132b and grooves 132p (in phantom) which define a plurality of circumferentially spaced thrust pads 132. The cross-section of the grooves 132p and bottom recesses 132b is best illustrated in the cross-sectional view of FIG. 1B. As shown in this figure, the grooves 132p and 132b are very shallow. Finally, FIG. 1C shows a top view of the washer-like thrust bearing in which the circumferentially spaced pad defining grooves 132p are depicted and the bottom recesses 132b are shown in phantom.

As previously discussed, the pad defining grooves 132p define a circumferentially spaced series of bearing pads 132. The bottom recesses 132b undercut the pad surface to a sufficient extent that the portion of the thrust pad surface that is undercut can deflect slightly downward so as to form a conveying wedge and a lubricant retaining pocket. Collectively, these deflections result in the formation of a series of converging wedges so that the shaft runner is supported on a layer of pressurized fluid film. Further, because of the nature of the bottom recesses 132b the lubricant is retained on the pad surface and does not escape from the radially inner and outer edges of the pad. Finite element analysis has shown that, under sufficient load, this simple washer will deflect so as to operate as a multiple pad hydrodynamic bearing even without a deflecting support structure. Thus, a simple washer-type bearing pad configuration of the type shown in FIGS. 1A-1C can be mounted on a rigid support structure and still obtain satisfactory results. Of course, a deflecting support structure could be used, if desired.

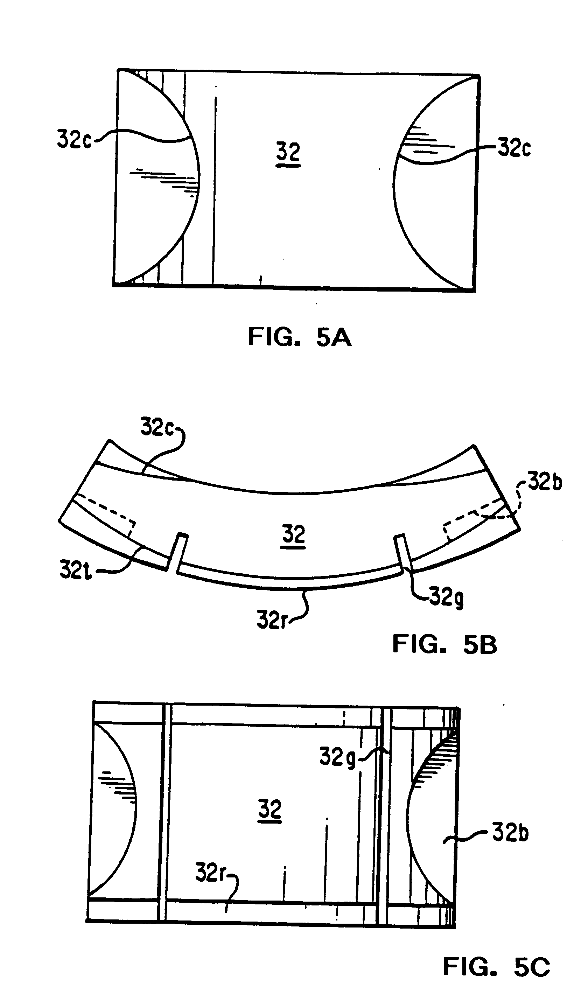

As mentioned before, the design of a pad shape for any particular application depends on the requirements of that application. The foregoing and following structural modifications and considerations can be used alone or in combination. FIGS. 2A-2C and 5A-5C show how all these features can be combined in a single bearing. This is not to suggest that all these features should necessarily be included in every design. Indeed, this would rarely be required. However, it is possible to combine all these features in a single bearing, if desired.

FIG. 2A shows a top view of a thrust bearing or combined radial/thrust bearing in which the bearing pads 132 are provided with radius cuts 132C to increase the length of the leading edge. The radius cuts 132C are provided on each edge so as to permit bidirectional operation. of course, if desired, the radius cuts 132C can be provided on only one edge to provide optimum results for unidirectional operation. In FIG. 2A, the individual pads 132 are defined by pad defining grooves 132p.

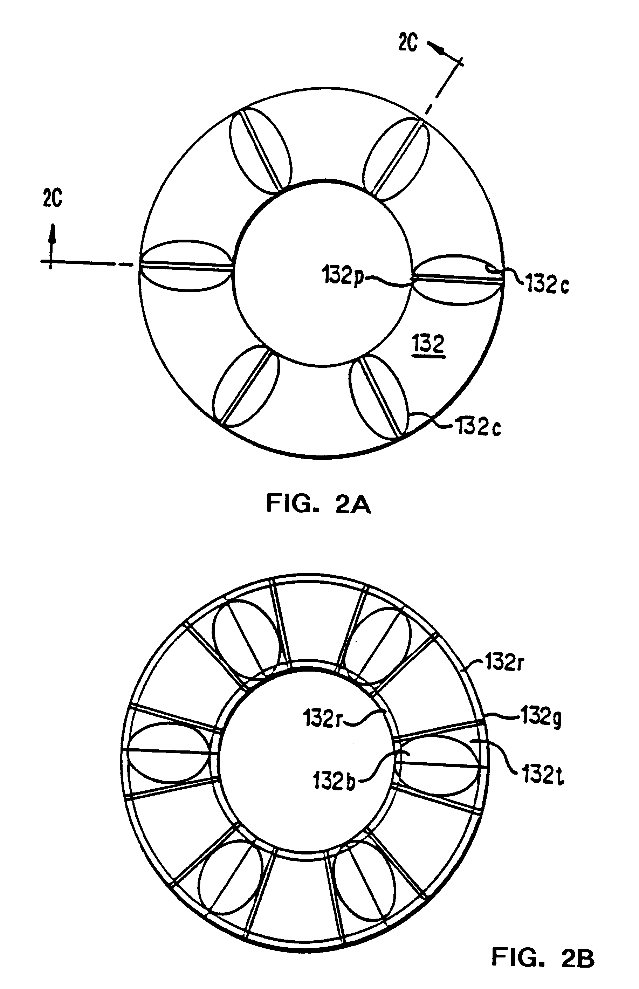

FIG. 2B shows a bottom view of the thrust bearing of FIG. 2A. In this view, it can be seen that the bearing includes bottom rails 132r, grooves 132g to increase inlet bending, a taper 132t to further increase inlet bending and a bottom recess 132b to further charnel liquid and increase inlet bending. In this cam, the grooves, taper, and recesses collectively provide the desired deflection.

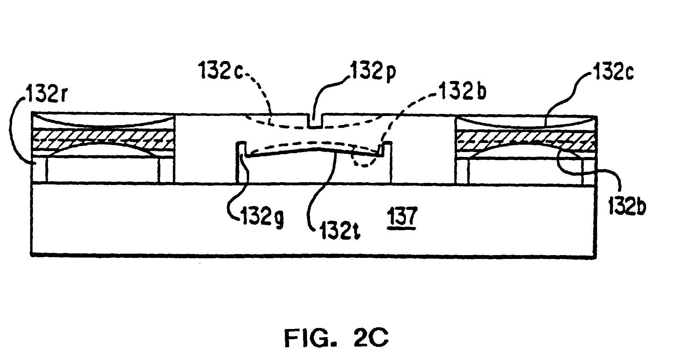

FIG. 2C is a cross-section of the bearing of FIG. 2A along the lines indicated in FIG. 2A. FIG. 2C also shows the bearing mounted on a support structure 137. The support structure is shown schematically as a box to indicate that, in accordance with the present invention, various support structures can be used. As noted above, it is possible through proper pad design to obviate the need for a deflecting support structure. In such a case, the support structure could be rigid, e.g., the housing. Alternatively, however, the support structure can be a deflecting support structure of any of the types disclosed heroin having primary, secondary and tertiary support portions for supporting the bearing pads for movement with six degrees of freedom. Likewise, the pad modifications discussed herein are generally applicable individually or in combination to the bearing pads of any of the bearings disclosed herein.

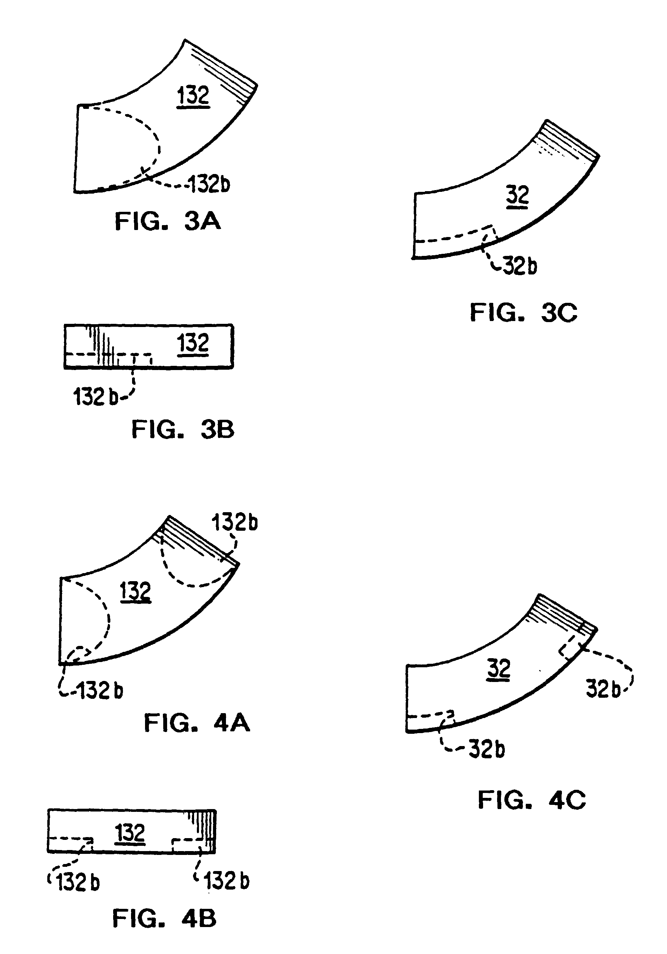

Further examples of bottom recesses formed in pads designed for unidirectional operation are shown in FIGS. 3A-3C. FIGS. 3A-3B show top and side views of a thrust bearing pad 132 formed with a bottom recess 132b to cause channeling. The reduced pad area also enables compressive deflections onto the bottom surface which develops a converging wedge. Since this modification is provided on only one edge of the pad 132, the pad is intended for use in a unidirectional bearing. The pad construction shown in FIGS. 3A and 3B is essentially the same as would be used for a combined radial/ thrust bearing. The only difference is that the pad would be formed of a conical section.

FIG. 3C shows a radial bearing pad 32 provided with a bottom recess 32b on one edge thereof. Again, this is a unidirectional bearing.

FIGS. 4A-4C illustrate bearing pad configurations similar to those shown in FIGS. 3A-3C except that the bottom recesses 132b are provided at both edges of the bearing pad so as to permit bidirectional operation. Specifically, the thrust or combined radial and thrust bearing pad 132 shown in FIGS. 3A and 4B includes bottom recesses 132b at each edge thereof. As is apparent by comparing FIGS. 4A-4B with FIGS. 3A-3B, the bottom recesses are somewhat smaller to accommodate the provision of such recesses at each edge.

Likewise, in FIG. 4C the radial bearing pad 32 includes bottom recesses 32b at each edge thereof. Again, the recesses are somewhat shorter than the recesses provided in the unidirectional bearing shown in FIGS. 3C.

FIG. 5A shows a top view of a journal or radial bearing pad 32 having a radius cut 32C formed in each edge thereof to increase the length of the leading edges This increases the amount of lubricant passing on to the bearing pad surface.

FIG. 5B shows a side view of the bearing pad 32 of FIG. 5A. From this view, it is possible to see the radius cut 32C formed on the top surface of the pad, the taper 32t formed at the bottom edges of the pad, the bottom recess 32b formed on the bottom side of the pad, the grooves 32g formed on the bottom side of the pad and the rails 32r extending radially outward from the bottom surface of the pad.

FIG. 5C shows the bottom view of the bearing pad of FIGS. 5C and 5B in which the bottom rails 32r, the grooves 32g and the bottom recess 32p are apparent.

As previously discussed, the pad defining grooves 132p define a circumferentially spaced series of bearing pads 132. The bottom recesses 132b undercut the pad surface to a sufficient extent that the portion of the thrust pad surface that is undercut can deflect slightly downward so as to form a conveying wedge and a lubricant retaining pocket. Collectively, these deflections result in the formation of a series of converging wedges so that the shaft runner is supported on a layer of pressurized fluid film. Further, because of the nature of the bottom recesses 132b the lubricant is retained on the pad surface and does not escape from the radially inner and outer edges of the pad. Finite element analysis has shown that, under sufficient load, this simple washer will deflect so as to operate as a multiple pad hydrodynamic bearing even without a deflecting support structure. Thus, a simple washer-type bearing pad configuration of the type shown in FIGS. 1A-1C can be mounted on a rigid support structure and still obtain satisfactory results. Of course, a deflecting support structure could be used, if desired.

An important aspect with respect to the manufacture of the hydrodynamic bearings of the present invention is the provision of machinable bearing shapes, i.e. bearing shapes which can be produced by machining a piece of heavy walled tubing or similar cylindrical journal using standardly available machining techniques. Such bearings are characterized by the fact that they are formed from a piece of heavy walled tubing or similar cylindrical journal through the provision of bores, slits and grooves. The advantage of such bearings is that it is easy to manufacture prototypes and to modify these prototypes after testing. Naturally, when the bearings are to be mass produced, using, for example, molding or casting techniques, different manufacturing considerations may dictate different shapes. It is important to recognize that changes in shape affect bearing performance.

Another manufacturing consideration is ease of molding. Naturally, most of the bearing constructions of the present invention are capable of being molded by some molding technique. However, only certain shapes can be injection molded in a simple two-piece mold, i.e., a mold which does not include cams. Another advantage of the bearings of the present invention is that the bearings can be constructed with easily moldable shapes which are defined as shapes which can be injection molded using a simple two-piece mold. An easily moldable shape generally is characterized by the absence of "hidden" cavities which require cams for molding.

## Claims

1. A hydrodynamic bearing for supporting a rotating shaft, the bearing comprising a plurality of spaced bearing pads (32; 132) and a support structure (137) for supporting the bearing pads (32;132), each of the bearing pads (32; 132) having a pad surface facing the rotating shaft, said surface defining a first face, a support surface facing the support structure, said surface defining a second face, a leading edge, a trailing edge and two side edges, characterized in that a recess (32b; 132b) is formed in the second face of each of the bearing pads (32; 132), the recess (32b; 132b) is spaced from the side edges and extending from the leading edge of the bearing pad (32; 132) so as to define an undercut region of the bearing pad (32;132), and a portion of the bearing pad (32; 132) which is not recessed is in contact with the support structure (137) such that under load the undercut region of the bearing pad (32; 132) deflects away from the shaft to be supported toward the support structures (137) so as to define a lubricant retaining pocket and to allow lubricant to enter the leading edge.

2. A hydrodynamic bearing for supporting a rotating shaft of claim 1, characterized in that individual pads (132) are defined by pad defining grooves (132p) formed in the face of a single member and extending between the side edges of the bearing pads (132).

3. A hydrodynamic bearing according to claim 1 or 2 forming a thrust bearing comprising a cylindrical body having a radially inner cylindrical surface; a radially outer cylindrical surface; and first and second plane faces extending between the radially inner and outer edges; a plurality of circumferentially spaced radially extending axial pad defining grooves (132p) formed in the first planar face so as to define a plurality of bearing pads (132), each of the bearing pads (132) having a leading edge, a trailing edge and side edges defined by the radially inner and outer edges; a plurality of bottom recesses (132b) formed in the second planar face of the cylindrical body the bottom recesses (132b) being spaced from the radially inner and outer edges and extending toward the first planar surface so as to undercut the first planar surface and the recesses (132b) being circumferentially spaced so as to undercut the leading edge portion of each of the pads (132) defined by the pad defining grooves (132p).

4. The hydrodynamic bearing according to any of claims 1 to 3, wherein the recesses (132b) formed in the second face have a generally horseshoe shape so as to define circumferential rail portions and a circular undercut edge.

## Patentansprüche

1. Hydrodynamisches Lager zur Aufnahme einer rotierenden Welle, in welchem das Lager eine Anzahl von voneinander beabstandeten Lagersegmenten (32; 132) und ein Auflageelement (137) zur Auflage der Lagersegmente (32; 132) umfaßt, wobei jedes der Lagersegmente (32; 132) eine der rotierenden Welle zugewandte Segmentfläche aufweist und diese Fläche aus einer ersten Seite besteht, sowie eine dem Auflageelement zugewandte Auflagefläche und diese Fläche aus einer zweiten Seite, einer Vorderkante, einer Hinterkante und zwei Seitenkanten besteht, dadurch gekennzeichnet, daß in die zweite Seite eines jeden Lagersegments (32; 132) eine Auskehlung (32b; 132b) geformt ist, welche von den Seitenkanten beabstandet ist und sich von der Vorderkante des jeweiligen Lagersegmentes (32, 132) ausgeht zur Bildung eines unterschnittenen Bereichs des Lagersegments (32; 132) und wobei ein nicht mit der Auskehlung versehener Teil des Lagersegments in Kontakt mit dem Auflageelement (137) kommt, so daß der unterschnittene Bereich des Lagersegments (32; 132) unter Druck von der aufzunehmenden Welle weg hin zum Auflageelement (137) gelenkt wird, um eine das Schmiermittel zurückhaltende Tasche zu bilden und dem Schmiermittel den Zugang zur Vorderkante zu ermöglichen.

2. Hydrodynamisches Lager zur Aufnahme einer rotierenden Welle nach Anspruch 1, dadurch gekennzeichnet, daß einzelne Segmente (132) über in die Fläche eines einzelnen Segmentglieds eingeformte segmentbestimmende und sich zwischen den Seitenkanten der Lagersegmente (132) erstreckenden Kerben (132p) gebildet werden.

3. Hydrodynamisches Lager nach den Ansprüchen 1 oder 2, welche ein Axiallager bilden, mit einer radial angeordneten inneren zylindrischen Fläche; einer radial angeordneten äußeren zylindrischen Fläche; einer sich zwischen den radial angeordneten inneren und äußeren Kanten erstreckenden zweite Planfläche; einer Anzahl von in die erste Planfläche eingeformten, über den Umfang betrachtet voneinander beabstandeten sich radial erstreckenden segmentbestimmenden Kerben (132p) zur Ausbildung einer Anzahl von Lagersegmenten (132), wobei jedes der Lagersegmente (132) eine über die radial angeordneten Innen- und Außenkanten definierte Vorderkante, eine Hinterkante und Seitenkanten aufweist; einer Anzahl von in den Boden der zweiten Planfläche des zylindrischen Körpers eingeformten Einkerbungen (132b), die von den radial angeordneten Innen- und Außenkanten beabstandet sind und sich in Richtung der ersten Planfläche erstrecken, um so die erste Planfläche und die über den Umfang voneinander beabstandeten Einkerbungen (132b) zu unterschneiden, so daß der Vorderkantenbereich eines jeden, über die segmentbestimmenden Einkerbungen (132p) definierten Segments unterschnitten wird.

4. Hydrodynamisches Lager nach jedem der Ansprüche 1 bis 3, in welchem die in die zweite Fläche eingeformten Einkerbungen (132b) im allgemeinen hufeisenförmig ausgebildet sind, so daß sie über den Umfang betrachtet Schienensegmente und eine ringförmige unterschnittene Kante bilden.

## Revendications

1. Palier hydrodynamique pour le support d'un arbre rotatif, ledit palier comportant une pluralité de patins de palier (32;132) étant entre-distant et un élément de support (137) pour supporter les patins de palier (32;132) dont chacun montre une superficie de patin faisant face à l'arbre ratatif, ladite superficie déterminant une première face, une superficie de support faisant face à l'élément de support, ladite superficie déterminant une deuxième face, une arête avant, un bord arrière et deux arêtes latérales, **caractérisé en ce** que, dans la deuxième face de chacun des patins de palier (32;132), on a formé une gorge (32b;132b) avec distance des arêtes latérales et s'étendant de l'arêt avant du patin de palier (32;132) afin de déterminer une partie détallonnée du patin de palier (32;132), et une partie du patin de palier (32;132) qui n'est pas détalonnée étant en contact avec l'élément de support (137) de manière que, en charge, la partie détallonnée du patin de palier (32;132) défléchit de l'arbre à être supporté vers l'élément de support (137) afin qu'une poche retenant le lubrifiant soit déterminée et le lubrifiant soit admis d'entrer à l'arête avant.

2. Palier hydrodynamique pour le support d'un arbre rotatif d'après la revendication 1, caractérisé en ce que des patins individuels (132) sont déterminés par des rainures (132p) déterminant les patins et formées dans la face d'un élément unique et s'étendant entre les arêtes latérales des patins de palier (132).

3. Palier hydrodynamique d'après les revendications 1 ou 2, formant un palier de butée comportant un corps cylindrique d'une surface intérieure d'orientation radiale; une surface extérieure cylindrique d'orientation radiale; une première et une deuxième surface plane s'étendant entre l'arête intérieure et l'arête extérieure d'orientation radiale; une pluralité de rainures d'entre-distance à la circonférence et s'étendant radialement ainsi déterminant des patins axiaux (132p), lesdites rainures étant formées dans la première face plane pour la détermination d'une pluralité de patins de palier (132), dont chacun des patins de palier (132) montre une arête avant, un bord arrière et des arêtes latérales déterminés par l'arête intérieure et l'arête extérieure d'orientation radiale; une pluralité de gorges du bas (132b) formées dans la deuxième face plane du corps cylindtrique, lesdites gorges du bas (132b) montrant une distance de l'arête intérieure et de l'arête extérieure d'orientation radiale et s'étendant vers la première face plane pour le détallonage de la première face plane et des gorges (132b) qui ont une entre-distance à la circonférence pour le détallonage de la partie de l'arête avant de chacun des patins (132) déterminé par les rainures (132p) déterminant les patins.

4. Palier hydrodynamique d'après chacune des revendications 1 à 3, en quoi les gorges (132b) formées dans la deuxème surface montrent généralement la forme d'un fer à cheval pour déterminer des parties de trace à la circonférence et une arête de détallonage circulaire.
